# EUROPEAN PATENT SPECIFICATION

(11) **EP 2 037 525 B1**
(45) Date of publication and mention of the grant of the patent: **20.04.2011**
(21) Application number: 08015933.8
(22) Date of filing: 10.09.2008
(51) Int. Cl.: H01M 8/10, C08J 5/22

(54) **Electrolyte membrane, membrane and electrode assembly and fuel cell using membrane and electrode assembly**
Elektrolytmembran, Membran- und Elektrodenanordnung und Brennstoffzelle mit dieser Membran- und Elektrodenanordnung
Membrane d'électrolyte, membrane et ensemble d'électrodes et pile à combustible utilisant cette membrane et ensemble d'électrodes

(30) Priority: 11.09.2007 JP 2007235973
(43) Date of publication of application: 18.03.2009
(73) Proprietor: FUJIFILM Corporation, Minato-ku Tokyo 106-0031 (JP)
(72) Inventor: Kawakami, Hiroshi, Ashigarakami-gun Kanagawa 258-8577 (JP)
(74) Representative: HOFFMANN EITLE

(56) References cited:
- JP-A- 11 162 485
- US-A1- 2005 112 448
- US-A1- 2006 003 195

## Description

### BACKGROUND OF THE INVENTION

### Field of the Invention

The present invention relates to a fuel cell of a solid polymer electrolyte type and in particular, to such a cell which can maintain a high output by properly controlling the behaviour of water in a high polymer electrolyte membrane even when humidification from the outside is reduced.

### Description of the Related Art

In recent years, in cooperation with social needs and trend against the backdrop of an energy or environmental issue, a fuel cell capable of working even at normal temperature and of yielding a high output density is noticed as a power source for electric automobile or a stationary power source. The fuel cell is a clean power generating system in which a product by the electrode reaction is water in principle and which does not substantially adversely affect the global environment. The fuel cell includes a polymer electrolyte fuel cell (PEFC), a phosphoric acid fuel cell (PAFC), an alkaline fuel cell (AFC), a solid oxide fuel cell (SOFC) and a molten carbonate fuel cell (MCFC). Of these, the polymer electrolyte fuel cell is expected as a power source for electric automobile because it works at a relatively low temperature and yields a high output density.

In general, the polymer electrolyte fuel cell has a structure in which a membrane and electrode assembly (hereinafter also referred to as "MEA") is interposed between separators. For example, MEA is composed such that an electrolyte membrane is interposed between a pair of a catalyst layer and a conductive layer (gas diffusion layer).

The catalyst layer is a porous layer formed of a mixture of an electrolyte and a conductive material on which an active metal catalyst is supported. Also, as a conductive layer, a layer by forming a carbon water-repellent layer comprising a carbon particle, a water repellent and the like on the surface of a gas diffusion substrate such as carbon cloth is used.

In the polymer electrolyte fuel cell, an electrochemical reaction proceeds in the following manner. First of all, hydrogen contained in a fuel gas which is supplied into the catalyst layer on the anode electrode side is oxidized by the active metal catalyst to form a proton and an electron as expressed in the following expression (1). Next, the formed proton goes through a proton conducting material contained in the catalyst layer on the anode electrode side and further through the electrolyte membrane coming into contact with the catalyst layer on the anode electrode side to reach the catalyst layer on the cathode electrode side. Also, the electron formed in the catalyst layer on the anode electrode side goes through a conductive material constituting the catalyst layer on the anode electrode side and further through the conductive layer contacting with the side different from the polymer electrolyte membrane of the catalyst layer on the anode electrode side and passes through a separator and an external circuit to reach the catalyst layer on the cathode electrode side. The proton and the electron, both of which have reached the catalyst layer on the cathode electrode side react with oxygen contained in an oxidizing agent gas which is supplied on the cathode electrode side by the active metal catalyst to form water as expressed in the following expression (2). The fuel cell makes it possible to take out electricity to the outside through the foregoing electrochemical reaction. Catalyst layer on the anode electrode side: H₂ → 2H⁺ + 2e⁻ (1) Catalyst layer on the cathode electrode side: 1/2O₂ + 2H⁺ + 2e⁻ → H₂O (2)

For that reason, the electrolyte membrane is required to have high proton conductivity, a function as a separator interposed between the electrodes and the like.

In the polymer electrolyte fuel cell, in order to efficiently transfer a proton formed in the anode electrode into the cathode electrode, it is necessary that a large quantity of water is supplied into the electrolyte membrane. This water supply is carried out by humidifying hydrogen as the fuel gas. This is a burden in operating the fuel cell, and means for reducing the required humidification amount and reducing the burden is demanded.

On the other hand, water is formed by a chemical reaction on the cathode electrode side of the fuel cell. Therefore, it is supposed that excessive water tends to exist, and the excessive water covers an active site of the metal catalyst to hinder the diffusion of a gas, resulting in causing a lowering of the output.

Then, as a countermeasure of the foregoing problem, a technology of using an electrolyte membrane having a profile such that an ion exchange capacity of the electrolyte membrane gradually increases in a thickness direction from the cathode electrode side toward the anode cathode side is disclosed in JP-A-6-231781 and JP-A-11-162485. According to these patent documents, it is intended to promote inverse diffusion of water formed in the cathode electrode into the anode electrode side by gradually increasing the profile of the ion exchange capacity in a thickness direction toward the thickness direction.

More specifically, JP-A-6-231781 discloses a membrane and electrode assembly having a profile such that by stacking plural solid polymer electrolyte membranes having a different ion exchange capacity and pressing them at a high temperature, the ion exchange capacity gradually increases in a thickness direction from the cathode electrode side toward the anode electrode side.

Also, JP-A-11-162485 discloses a membrane and electrode assembly having a profile such that by, for example, bringing a sulfonating agent into contact with only one side of a polymer film to continuously change a concentration of a sulfonic group in a membrane thickness direction, the ion exchange capacity continuously increases in a thickness direction from the cathode electrode side toward the anode electrode side.

However, in these membrane and electrode assemblies, the state that excessive water exists in the catalyst layer on the anode electrode side is easily generated, and the excessive water covers an active site of the catalyst on the anode electrode side to hinder the diffusion of a gas, resulting in causing a lowering of the output.

US 2006/003195 discloses an electrolyte membrane including a proton conductive layer and hygroscopic layers placed on both sides. An example of the proton conductive layer is poly(perfluorosulfonic acid) and examples of the hygroscopic layer are polyethylene oxide, polyvinyl alcohol or other polymers with carboxylic or sulphonic acid groups or copolymers of tetrafluoroethylene and fluorovinylether including a sulfonic acid group. The hygroscopic polymer layer is about 2-10 µm thick.

US 2005/112448 teaches an adhesion layer containing a second solid polymer electrolyte disposed between a solid polymer electrolyte membrane and a fuel electrode and/or an oxidant electrode containing a first solid polymer electrolyte and a catalyst substance. The solid polymer electrolyte membrane and the adhesion layer are made of the same solid polymer electrolyte. In this manner, the adhesion at the interface between the electrode surface and the solid polymer electrolyte membrane is enhanced which improves the cell characteristics and the reliability of the cell.

### SUMMARY OF THE INVENTION

An object of the invention is to solve the foregoing problems and to provide a high output fuel cell by making water of catalyst layers of a cathode electrode and an anode electrode of a membrane and electrode assembly appropriate.

According to a first aspect, the first invention provides a membrane and electrode assembly comprising an anode electrode having a catalyst layer, a cathode electrode having a catalyst layer and an electrolyte membrane interposed between these catalyst layers whose ion exchange capacity is distributed in the thickness direction of the electrolyte membrane so that:
(i) it is at a maximum at a depth of from 10 to 30% from its interface with the catalyst layer of the anode electrode; and
(ii) if the ion exchange capacity of the electrolyte membrane where it contacts the catalyst layer of the cathode is Ic, the ion exchange capacity of the electrolyte membrane where it contacts the catalyst layer of the anode is Ia, and the maximum ion exchange capacity of the electrolyte membrane is Imax, then 0.4Imax≤Ic≤0.9Imax and 0.6Imax≤Ia≤0.9Imax.

Preferably the ionic exchange capacity of the electrolyte membrane is at a maximum at a depth of 10 µm or more from its interface with the catalyst layer of the anode electrode.

Preferably, the catalyst layer of the cathode electrode contains a fluorine resin in an amount of 2% by weight or more of the weight of the active metal catalyst of the catalyst layer.

Preferably, the electrolyte membrane contains a polymer having, in a main chain thereof, a chemical structure of - (CF₂-CF₂)ₙ- or -(CF₂-CF₂)ₓ-(CH₂-CH₂)_{y}-, wherein n, x and y are each an integer.

According to a second aspect, the present invention provides a fuel cell comprising the membrane and the electrode assembly of the above first aspect.

According to the configuration of the invention, distribution of water in the electrolyte membrane and the catalyst layers on the cathode electrode side and the anode electrode side becomes appropriate so that realization of a high output of a fuel cell can be expected.

### BRIEF DESCRIPTION OF THE DRAWINGS

Fig. 1 is a diagrammatic cross-sectional view showing one example of a configuration of a membrane and electrode assembly.
Fig. 2 is a diagrammatic cross-sectional view showing one example of a structure of a fuel cell.
Fig. 3 is a graph showing a profile of an ion exchange capacity of each of solid polymer electrolyte membranes 1A to 1E of Example 1.
Fig. 4 is a graph showing a profile of an ion exchange capacity of each of solid polymer electrolyte membranes 2A to 2C of Example 2.

### DETAILED DESCRIPTION OF THE PREFERRED EMBODIMENTS

The contents of the invention are hereunder described in detail. In this specification, numerical value ranges expressed by the term "to" mean that the numerical values described before and after it are included as a lower limit and an upper limit, respectively. In this specification, the "group" such as an alkyl group may or may not have a substituent so far as the gist of the invention is not deviated. Furthermore, in case of a group whose carbon atom number is limited, the carbon atom number means the number including the carbon atom number which any substituent has.

In the membrane and electrode assembly of the invention, distribution of an ion exchange capacity in a thickness direction becomes maximum at a point of from 10 to 30 % in the thickness direction of the electrolyte membrane and preferably becomes maximum at a depth of 10 µm or more far from its interface with the catalyst layer of the anode electrode.

By employing such a measure, when the distribution of water in the electrolyte membrane and in the catalyst layers on the anode electrode side and the cathode electrode side is made appropriate, and the resulting electrolyte membrane is used for a fuel cell, a high output can be realized.

It has hitherto been studied to devise to make the distribution of water appropriate and to realize a high output of a fuel cell by using an electrolyte membrane having distribution such that an ion exchange capacity in the electrolyte membrane monotonously increases step-by-step in a thickness direction from an interface coming into contact with a catalyst layer on the cathode electrode side toward an interface coming into contact with a catalyst layer on the anode electrode side (see, for example, JP-A-6-231781 and JP-A-11-162485). However, these methods involved a problem that the state that excessive water exists in the catalyst layer on the anode electrode side is easily generated, and the excessive water covers an active site of the metal catalyst on the anode electrode side to hinder the diffusion of a gas, resulting in causing a lowering of the output.

In the invention, it has been found that the foregoing problem can be solved by setting up a point at which the ion exchange capacity of the electrolyte membrane becomes maximum at a point coming into contact with the catalyst layer on the anode electrode side, namely not an interface but a point positioning slightly inward from the membrane.

That is, the invention has been made on the basis of finding that in order to inversely diffuse water formed on the cathode electrode side into the anode electrode side, the point at which the ion exchange capacity becomes maximum is at a point inclined toward the anode electrode side from the midway between the cathode electrode and the anode electrode. Furthermore, when the point at which the ion exchange capacity becomes maximum is present in the vicinity of an interface of the electrolyte membrane coming into contact with the catalyst layer on the anode electrode side, water is easy to reside at the foregoing interface so that the catalyst layer on the anode electrode side becomes excessive in water. Thus, in order to avoid this matter, the invention has been made on the basis of finding that it is effective to set up the point at which the ion exchange capacity becomes maximum at a point slightly far from the vicinity of the foregoing interface.

The depth at which the ion exchange capacity in the thickness direction of the electrolyte membrane becomes maximum is in a position of from 10 to 30 %, and more preferably in a position of from 10 to 20 % in the thickness direction of the electrolyte membrane.

It is preferable that the point at which the ion exchange capacity in the thickness direction of the electrolyte membrane becomes maximum is at a depth of 10 µm or more far from the membrane surface of the electrolyte membrane.

When a value of the ion exchange capacity at a point (interface) at which the electrolyte membrane of the invention comes into contact the catalyst layer on the cathode electrode side is defined as Ic, a value of the ion exchange capacity at a point (interface) at which the electrolyte membrane of the invention comes into contact the catalyst layer on the anode electrode side is defined as Ia, and a value of the point at which the ion exchange capacity becomes maximum is defined as Imax, Ic satisfies 0.4 Imax ≤ Ic ≤ 0.9 Imax, and preferably satisfies 0.6 Imax ≤ Ic ≤ 0.8 Imax; and Ia satisfies 0.6 Imax ≤ Ia ≤ 0.9 Imax, and preferably satisfies 0.7 Imax ≤ Ia ≤ 0.85 Imax.

In the invention, it is preferable that the catalyst layer on the cathode electrode side contains a fluorine resin. Examples of the fluorine resin which can be preferably used include PTFE (polytetrafluoroethylene), FEP (fluorinated ethylene polypropylene copolymer), PFA (tetrafluoroethylene-perfluoroalkyl vinyl ether copolymer), ETFE (ethylene·tetrafluoroethylene copolymer), PCTFE (polychlorotrifluoroethylene), PVDF (polyvinylidene fluoride) and E-CTFE (trifluorochloroethylene-ethylene copolymer).

In this way, when the catalyst layer on the cathode electrode side contains a fluorine resin in an amount of 2 % by weight or more of the weight of an active metal catalyst of the catalyst layer, a higher output can be achieved, and therefore, such is preferable. By containing a fluorine resin in the catalyst layer on the cathode electrode side, water repellency is imparted to the cathode electrode. According to this, water formed on the cathode electrode side is easy to inversely diffuse into the direction on the anode electrode side.

The content of such a fluorine resin is preferably from 2 to 40 %, and more preferably from 4 to 20 % of the weight of the active metal catalyst of the catalyst layer on the cathode electrode side.

The fluorine resin may also be contained in the catalyst layer on the anode electrode side. In that case, it is preferable that its content is lower than the content on the cathode electrode side. Specifically, the content of the fluorine resin is preferably from 0 to 20 % of the weight of an active metal catalyst on the anode electrode side.

As to the electrolyte membrane of the invention, the ion exchange capacity varies in the thickness direction of the membrane. Such an electrolyte membrane can be prepared by treating a known electrolyte membrane according to the following methods.

### (Production method 1)

A method in which plural electrolyte membranes having a different ion exchange capacity are stacked and subjected to contact bonding at a high temperature. However, a pattern of stacking is adjusted such that the profile of the ion exchange capacity in the thickness direction falls with an embodiment of the invention.

For example, a polymer of an electrolyte is subjected to extrusion fabrication at 220°C, thereby preparing several kinds of films having a different ion exchange capacity in a thickness of about 10 µm. Subsequently, a plural number of the obtained films are stacked in a desired pattern and stuck at 220°C by roll pressing.

### (Production method 2)

As disclosed in JP-A-11-162485, in graft polymerizing a side chain on a film of a polymer as a base, by changing a composition of a monomer solution coming into contact with each of one surface of the film and the surface on the opposite side thereto, an inclination can be given to the degree of graft polymerization. Thereafter, by imparting a sulfonic group in a tip portion of the side chain with a sulfonating agent, an electrolyte membrane in which the ion exchange capacity continuously varies in the thickness direction can be obtained.

However, in order that the profile of the ion exchange capacity may fall within an embodiment of the invention, namely a site at which the ion exchange capacity becomes maximum may be present in the inside of the electrolyte membrane, it is necessary to stick two electrolyte membranes in which the ion exchange capacity continuously changes in the thickness direction such that the sides having a larger ion exchange capacity come into contact with each other. For achieving the sticking, the foregoing method (production method 1) for achieving contact bonding at a high temperature can be employed.

Though the known fabrication method of an electrolyte membrane to be employed in the preparation of the electrolyte membrane of the invention is not particularly limited, a method of achieving fabrication from a solution state (a solution casting method), a method of achieving fabrication from a molten state (a melt pressing method or a melt extrusion method) and the like can be employed. Specifically, as to the former, the fabrication can be achieved by, for example, cast coating a solution containing an ion exchange polymer as the electrolyte on a glass plate and removing a solvent. The solvent to be used for the fabrication is not particularly limited so far as it is able to dissolve an ion exchange polymer as the electrolyte therein and be then removed. Examples of the solvent which can be favorably used include aprotic polar solvents such as N,N'-dimethylformamide, N,N'-dimethylacetamide, N-methyl-2-pyrrolidone and dimethyl sulfoxide; alkylene glycol monoalkyl ethers such as ethylene glycol monomethyl ether, ethylene glycol monoethyl ether, propylene glycol monomethyl ether and propylene glycol monoethyl ether; halogen based solvents such as dichloromethane and trichloroethane; and alcohols such as isopropyl alcohol and tert-butyl alcohol.

Though a thickness of the electrolyte membrane of the invention is not particularly limited, it is preferably from 10 to 300 µm, more preferably from 10 to 200 µm, and further preferably from 30 to 100 µm. When the thickness of the electrolyte membrane is 10 µm or more, the electrolyte membrane has a strength more suitable for practical use; and when it is not more than 300 µm, a reduction in the membrane resistance, namely an enhancement in the power generating performance tends to be enhanced, and therefore, such range is preferable.

In the case of the solution casting method, the thickness of the electrolyte membrane can be controlled by regulating the concentration of the solution of the ion exchange polymer as the electrolyte or regulating the thickness for coating on a substrate. In the case of the fabrication from a molten state, the thickness of the electrolyte membrane can be controlled by stretching a film having a prescribed thickness as obtained by a melt pressing method, a melt extrusion method or the like in a prescribed stretch ratio. In the case of forming the electrolyte membrane of the invention by stacking plural electrolyte membranes, the thickness of the electrolyte membrane can be regulated by adjusting the stacking number.

An average ion exchange capacity of the whole of membrane of the electrolyte membrane to be used in the invention is preferably from 0.40 to 4.00 meq/g, more preferably from 0.6 to 3.4 meq/g, and further preferably from 0.9 to 2.9 meq/g. When the average ion exchange capacity of the whole of membrane is 0.40 meq/g or more, the output performance tends to be enhanced, whereas when it is not more than 4.00 meq/g, the waterproof properties of the electrolyte membrane tend to be enhanced, and therefore, such range is preferable.

The ion exchange capacity as referred to in the invention refers to the molar number of an ion exchange group to be introduced per unit mass of the electrolyte membrane, and it is meant that the larger the value, the higher the content of the ion exchange group. The ion exchange capacity can be measured by ¹H-NMR spectroscopy, elemental analysis, acid-base titration described in JP-B-1-52866, non-aqueous acid-base titration (a normal solution is a benzene/methanol solution of potassium methoxide), etc.

As to the electrolyte membrane of the invention, fluorine based polymers are excellent in chemical stability so that they can be preferably used as the electrolyte. For example, those in which a main chain of a polymer constituting the electrolyte has a chemical structure of any one of -(CF₂-CF₂)ₙ- and - (CF₂-CF₂)ₓ-(CH₂-CH₂)_{y}- (wherein n, x and y are each an integer) are preferable. Specific examples thereof include perfluorosulfonic acid membranes having high proton conductivity, which are known as trade names including NAFION (a registered trademark, manufactured by DuPont), ACIPLEX (a registered trademark, manufactured by Asahi Kasei Corporation) and FLEMION (a registered trademark, manufactured by Asahi Glass Co., Ltd.).

In the present invention, as the conductive material, a sulfoalkylated aromatic hydrocarbon based polymer having an aromatic ring into the main chain may be used. In particular, preferable is a sulfoalkylated aromatic hydrocarbon having a sulfoalkyl group represented by the following formula (1) into a side chain thereof.

Specific examples of a sulfoalkylated aromatic hydrocarbon based polymer include engineering plastics such as polyetheretherketone (PEEK) having a structural unit represented by the following formula (2) which is developed by ICI, UK in 1977; semi-crystalline polyaryletherketone (PAEK) which is developed by BASF, Germany; polyetherketone (PEK) having a structural unit represented by the following formula (3) which is sold by Sumitomo Chemical Co., Ltd., etc.; polyketone (PK) which is sold by Teijin Amoco Engineering Plastic Ltd.; polyethersulfone (PES) having a structural unit represented by the following formula (4) which is sold by Sumitomo Chemical Co., Ltd., Teijin Amoco Engineering Plastics Ltd., Mitsui Chemicals Inc., etc.; polysulfone (PSU) having a structural unit represented by the following formula (5) which is sold by Solvay Advanced Polymers K.K.; linear or crosslinked polyphenylene sulfide (PPS) having a structural unit represented by the following formula (6) which is sold by Toray Industries, Inc. , Dai Nippon Chemical Industries Inc. , Toopren K.K., Idemitsu petrochemical Co., Ltd., Kureha Corporation, etc.; and denatured polyphenylene ether (PPE) having a structural unit represented by the following formula (7) which is sold by Asahi Kasei Corporation, GE Plastics Japan Ltd., Mitsubishi Engineering-Plastics Corporation and Sumitomo Chemical Co., Ltd.; or aromatic hydrocarbon based polymers having a sulfoalkyl group represented by the following formula (1) introduced into a side chain of a polymer alloy thereof.

Of these, from the viewpoint of resistance to oxidative deterioration of the main chain, the main chain is preferably PEEK, PEAK, PEK, PK, PPS, PES and PSU. 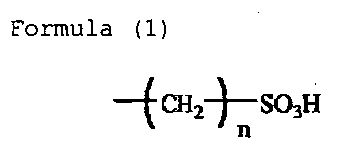 In the formula (1), n is 1, 2, 3, 4, 5 or 6.

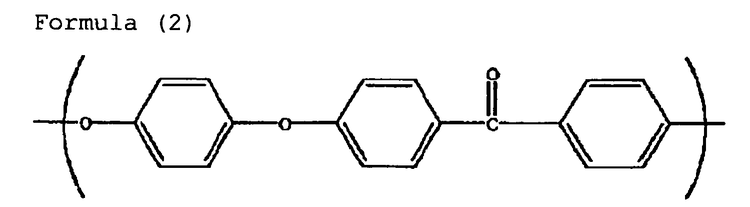

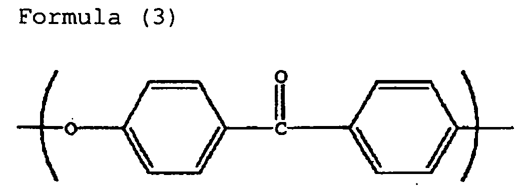

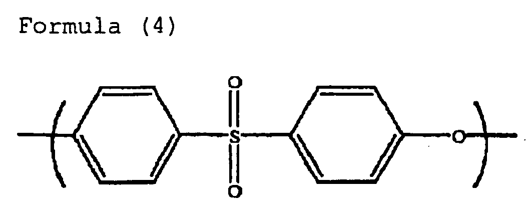

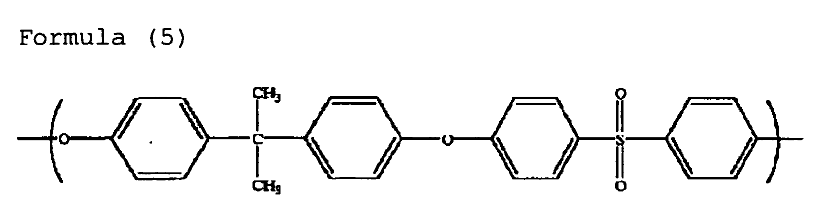

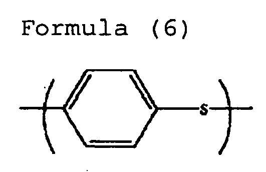

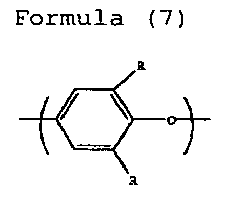

In the formula (7), R represents a lower alkyl group such as a methyl group and an ethyl group; or a phenyl group.

In the inventionm as the conductive material, a sulfonic acid type polystyrene-graft-ethylene tetrafluoroethylene copolymer (ETFE) constituted of a main chain prepared by copolymerization of a fluorocarbon based vinyl monomer and a hydrocarbon based vinyl monomer and a sulfonic group-containing hydrocarbon based side chain as disclosed in JP-A-9-102322; a sulfonic acid type polystyrene-graft-ETFE as disclosed in JP-A-9-102322; a sulfonic acid type poly(trifluorostyrene)-graft-ETFE formed into an electrolyte membrane by graft polymerizing α,β,β-trifluorostyrene on a membrane prepared by copolymerization of a fluorocarbon based vinyl monomer and a hydrocarbon based vinyl monomer to introduce a sulfonic group as disclosed in U.S. Patent No. 4,012,303 and U. S. Patent No. 4, 605, 685; and the like can also be used.

It is also preferable that the electrolyte membrane to be used in the invention is formed as a nano composite material membrane through combination with a heteropoly acid (HPA). This heteropoly acid is dispersed very well in this nano composite material membrane, whereby a substantially transparent membrane is obtained. The heteropoly acid-containing nano composite material membrane of the invention is preferable because it is able to operate the fuel cell at a temperature higher than 100°C and further enhances the proton conductivity of the electrolyte membrane while making the water absorption small.

Typically, for the purpose of enhancing the proton conductivity by hydration on a low level, an inorganic heteropoly acid is added so as to assist to hold water within the membrane on a local scale. The electrolyte membrane to be used in the invention is preferably the foregoing nano composition material membrane which exhibits high proton conductivity and low water absorption.

The terms "heteropoly acid", "inorganic heteropoly acid" and "HPA" used in this specification can be interpreted so as to have meanings described in, for example, Katsoulis, D.E., "A Survey of Applications of Polyoxometalates", Chemical Review, Vol. 1, pages 359 to 387 (1998). Also, those described in this document are preferably employed in the invention.

The nano composite material membrane can be formed by solution casting of a mixture of a polymer and a heretopoly acid. A weight ratio of the heteropoly acid to the polymer is, for example, in the range of from 10 % to 60 %. This ratio relies upon the kind of the polymer to be used and the kind of the heteropoly acid to be used and can be properly determined. Examples of the kind of the heteropoly acid include phosphotungstic acid, phosphomolybdic acid and zirconium hydrogenphosphate. However, it should not be construed that the invention is limited thereto.

### <<Other components of electrolyte membrane>>

The electrolyte membrane of the invention may include additives which are used for usual polymers, such as a plasticizer, a stabilizer and a release agent can be used within the range where the object of the invention is not hindered.

To the solid electrolyte of the invention, according to need, an oxidation inhibitor, a fiber, a fine particle, a water-absorbing agent, a plasticizer, a compatibilizing agent or the like may be added in order to enhance film properties. The content of these additives is preferably in a range of 1 to 30% by mass relative to the total amount of the solid electrolyte.

Preferable examples of the oxidation inhibitor include (hindered) phenol-based, mono- or di-valent sulfur-based, tri-or penta-phosphorous-based, benzophenone-based, benzotriazole-based, hindered amine-based, cyanoacrylate-based, salicylate-based, and oxalic acid anilide-based compounds. Specifically, compounds described in JP-A-8-53614, JP-A-10-101873, JP-A-11-114430 and JP-A-2003-151346 can be mentioned.

Preferable examples of the fiber include perfluorocabon fiber, cellulose fiber, glass fiber, polyethylene fiber and the like. Specifically, fibers described in JP-A-10-312815, JP-A-2000-231928, JP-A-2001-307545, JP-A-2003-317748, JP-A-2004-63430 and JP-A-2004-107461 can be mentioned.

Preferable examples of the fine particle include fine particles composed of silica, alumina, titanium oxide, zirconium oxide and the like. Specifically, those described in JP-A-6-111834, JP-A-2003-178777, and JP-A-2004-217921 can be mentioned.

Preferable examples of the water-absorbing agent (hydrophilic material) include cross-linked polyacrylates, starch-acrylates, poval, polyacrylonitrile, carboxymethyl cellulose, polyvinylpyrrolidone, polyglycol dialkylether, polyglycol dialkylester, silica gel, synthesized zeolite, alumina gel, titania gel, zirconia gel, and yttria gel. Specifically, water-absorbing agents described in JP-A-7-135003, JP-A-8-20716 and JP-A-9-251857 can be mentioned.

Preferable examples of the plasticizer include phosphoric acid ester-based compounds, phthalic acid ester-based compounds, aliphatic monobasic acid ester-based compounds, aliphatic dibasic acid ester-based compounds, dihydric alcohol ester-based compounds, oxyacid ester-based compounds, chlorinated paraffins, alkylnaphthalene-based compounds, sulfone alkylamide-based compounds, oligo ethers, cabonates, and aromatic nitriles. Specifically, those described in JP-A-2003-197030, JP-A-2003-288916, and JP-A-2003-317539 can be mentioned.

Further, the solid electrolyte of the invention may be incorporated with various polymer compounds for the purpose of (1) enhancing mechanical strength of the film, or (2) enhancing acid concentration in the film.
(1) For the purpose of enhancing mechanical strength, such polymer compound is suitable that has molecular weight of around 10, 000 to 1, 000, 000 and good compatibility with the solid electrolyte of the invention. For example, perfluorinated polymer, polystyrene, polyethylene glycol, polyoxetane, poly(meth)acrylate, polyether ketone, polyether sulfone, and polymers of 2 or more of these are preferable, and preferable content is in a range of 1 to 30% by mass relative to the whole.
   A compatibilizing agent has a boiling point or sublimation point of preferably 250°C or more, and more preferably 300°C or more.
(2) For the purpose of increasing acid concentration, such polymer compound is preferable that has a proton acid site such as perfluorocarbon sulfonic acid polymers as represented by NAFION (a registered trademark), poly(meth)acrylates having a phosphoric acid group in a side chain, or sulfonated heat resistant aromatic polymers such as sulfonated polyether ether ketone, sulfonated polyether sulfone, sulfonated polysulfone or sulfonated polybenzimidazole, which is preferably contained in a range of 1 to 30% by mass relative to the whole.

As to properties of the electrolyte membrane to be used in the invention, those having the following various performances are preferable.

An ionic conductivity is preferably 0.005 S/cm or more, and more preferably 0.01 S/cm or more at 25°C and 95 % RH.

As to the strength, for example, a tensile strength is preferably 10 MPa or more, and more preferably 20 MPa or more.

As to the storage elastic modulus in the embodiment is preferably 500MPa or more, and more preferably 1000MPa or more.

As to the electrolyte membrane to be used in the invention, one having stable water absorption and water content is preferable. It is preferable that the solubility of the electrolyte membrane to be used in invention is of a substantially negligible degree against alcohols, water and a mixed solvent thereof. It is preferable that when the electrolyte membrane to be used in the invention is dipped in the foregoing solvent, a loss in weight and a change in form are of a substantially negligible degree.

In the case of forming a membrane, as to the ion conducting direction, it is preferable that a direction from the front surface toward the rear surface is higher than other directions. However, the ion conducting direction may be random.

A heat resistant temperature of the electrolyte membrane to be used in the invention is preferably 200°C or higher, more preferably 250°C or higher, and further preferably 300°C or higher. For example, the heat resistant temperature can be defined as a time when it reaches a loss in weight of 5 % upon heating at a rate of 1°C/min. This loss in weight is calculated by eliminating a volatile matter such as water.

Further, when the solid electrolyte of the invention is used for a fuel cell, an active metal catalyst that facilitates the oxidation-reduction reaction of an anode fuel and a cathode fuel may be added. As the result, fuels permeating into the solid electrolyte tend to be consumed in the solid electrolyte without reaching the other electrode, whereby crossover can be prevented. As active metal type to be used, an active metal catalyst as described after is suitable and, platinum or an alloy based on platinum is preferable.

### <<Membrane and electrode assembly and fuel cell>>

Next, the membrane and electrode assembly (MEA) of the invention and the fuel cell using the membrane and electrode assembly are described.

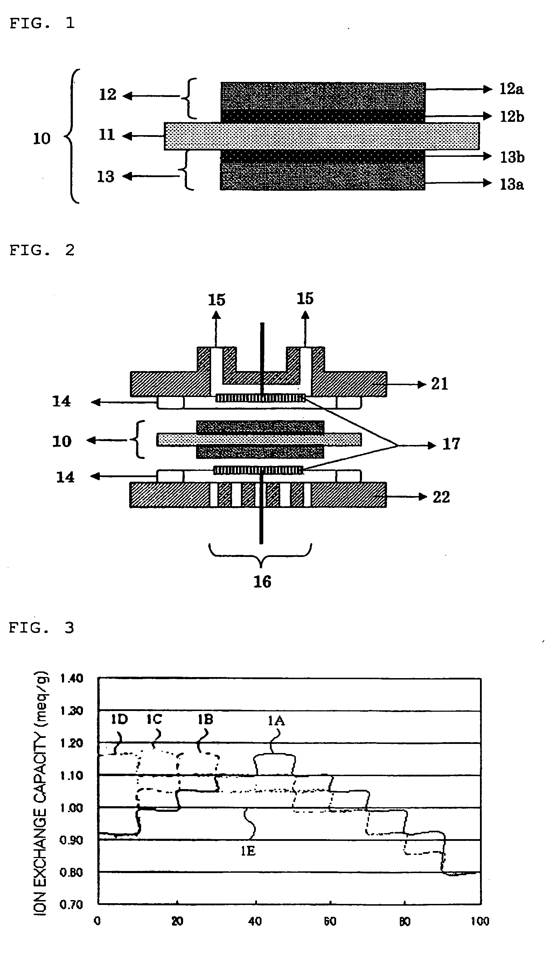

Fig. 1 shows one example of a cross-sectional diagrammatic view of the membrane and electrode assembly of the invention. MEA 10 is provided with an electrolyte membrane 11 and electrodes interposing the electrolyte membrane 11 therebetween and opposing to each other (an anode electrode 12 and a cathode electrode 13). These electrodes are preferably configured of catalyst layers 12b and 13b and conductive layers 12a and 13a, respectively. However, in the membrane and electrode assembly of the invention, it is sufficient to have only the catalyst layer, and it is not essential to have the conductive layer.

On the other hand, the catalyst layers 12b and 13b preferably include a conductive material containing a fine particle of an active metal catalyst and a binder. Here, the conductive material containing a fine particle of an active metal catalyst is preferably a catalyst having platinum, etc. supported on a carbon material. In addition to platinum, metals such as gold, silver, palladium, indium, rhodium, ruthenium, iron, cobalt, nickel, chromium, tungsten, manganese and vanadium; and alloys and compounds thereof can be used as the active metal catalyst. A particle size of the active metal catalyst which is usually used is in the range of from 2 to 10 nm. When the particle size is not more than 10 nm, the surface area per unit mass is large so that the activity is advantageously enhanced, whereas when it is 2 nm or more, the active metal catalyst is more easily dispersed, and therefore, such range is preferable. Examples of the carbon material which can be used include carbon blacks such as furnace black, channel black and acetylene black; fibrous carbons such as carbon nanotube; active carbon; and graphite. These materials can be used singly or in admixture.

Here, the binder of the catalyst layer is not limited so far as it is a solid having a proton donating group. Examples of polymer compounds having an acid residue which can be used in the electrolyte membrane include perfluorocarbon sulfonic acid polymers represented by NAFION (a registered trademark) ; poly(meth)acrylates having a phosphoric acid group in a side chain thereof; sulfonated polyetheretherketone; sulfonated polyetherketone; sulfonated polyethersulfone; sulfonated polysulfone; heat-resistant aromatic polymers such as sulfonated polybenzimidazole; sulfonated polystyrene, sulfonated polyoxetane; sulfonated polyimides; sulfonated polyphenylene sulfide; sulfonated polyphenylene oxide; and sulfonated polyphenylene. Specific examples thereof include those described in JP-A-2002-110174, JP-A-2002-105200, JP-A-2004-10677, JP-A-2003-132908, JP-A-2004-179154, JP-A-2004-175997, JP-A-2004-247182, JP-A-2003-147074, JP-A-2004-234931, JP-A-2002-289222 and JP-A-2003-208816.

When the binder is formed of a material of the same kind as in the electrolyte membrane, electrochemical adhesion between the electrolyte membrane and the catalyst layer is enhanced, and such is more advantageous.

As to the use amount of the active metal catalyst, a range of from 0.03 to 10 mg/cm² is suitable from the viewpoints of cell output and economy. The amount of the conductive material for supporting the active metal catalyst is suitably from 1 to 10 times the mass of the active metal catalyst. The amount of a proton conducting material as the binder of the catalyst layer is suitably from 0.1 to 2 times the mass of the conductive material for supporting the active metal catalyst.

Examples of a method for supporting the active metal catalyst include a heat reduction method, a sputtering method, a pulse laser deposition method and a vacuum vapor deposition method (see, for example, WO 2002/054514).

In the invention, as described previously, it is preferable that a fluorine resin is contained as a water repellent in the catalyst layer of the cathode electrode. A water repellent other than fluorine resins may be used jointly so far as it has excellent heat resistance and oxidation resistance. For the purpose of bringing the water repellent with conductivity, a carbon based water-repellent material can be used. As the carbon based water-repellent material with conductivity, active carbon, carbon black and carbon fibers can be used, and specific examples thereof include those described in JP-A-2005-276746.

A thickness of the catalyst layer is preferably from 5 to 200 µm, and especially preferably from 10 to 100 µm. When an average thickness of the electrolyte membrane is defined as dM, an average thickness of the anode electrode is defined as dA, and an average thickness of the cathode electrode is defined as dC, the relationship of 200 µm > dM > dC > dA is preferable, and the relationship of 100 µm > dM > dC > dA is more preferable.

On the other hand, the conductive layer (also called an electrode substrate, a transmission layer or a backing layer) is preferably one having a collection function and playing a role for preventing deterioration of the gas transmission to be caused due to gathering of water, and more preferably a porous sheet.

Specifically, the conductive layer is carbon paper, a carbon cloth or a non-woven fabric made of a carbon fiber as a raw material, and its thickness is preferably from 100 to 500 µm, and especially preferably from 150 to 400 µm. A material prepared by a treatment with polytetrafluoroethylene (PTFE) for the purpose of making it water-repellent can be used, too.

Fig. 2 shows one example of a structure of the fuel cell. The fuel cell has an MEA 10, a pair of collectors 17 composed of a separator and gaskets 14. The collector 17 on the anode electrode side is provided with a supply and exhaust opening 15 on the anode electrode side; and the collector 17 on the cathode electrode side is provided with a supply and an exhaust opening 16 on the cathode electrode side. A gas fuel such as hydrogen and an alcohol (for example, methanol) or a liquid fuel such as an alcohol aqueous solution is supplied from the supply and exhaust opening 15 on the anode electrode side; and an oxidizing agent gas such as an oxygen gas and air is supplied from the supply and exhaust opening 16 from the cathode electrode side.

Activated polarization in a hydrogen-oxygen system fuel cell is greater for a cathode pole side (air pole side) compared with anode pole side (hydrogen pole side). This is because reaction at the cathode pole side (reduction of oxygen) is slower compared with that at the anode pole side. In order to enhance activity of the cathode pole side, various platinum-based bimetallic catalysts such as Pt-Cr, Pt-Ni, Pt-Co, Pt-Cu, Pt-Fe can be used. In a fuel cell which employs a reformed gas from fossil fuels containing carbon monoxide as anode fuel, suppression of catalyst poisoning by CO is important. For this purpose, platinum-based bimetals such as Pt-Ru, Pt-Fe, Pt-Ni, Pt-Co and Pt-Mo, and trimetallic catalyst such as Pt-Ru-Mo, Pt-Ru-W, Pt-Ru-Co, Pt-Ru-Fe, Pt-Ru-Ni, Pt-Ru-Cu, Pt-Ru-Sn and Pt-Ru-Au can be used.

The functions of the electrode are: (1) to transport the fuel to the active metal, (2) to provide a field for oxidation reaction (anode pole) and reduction reaction (cathode pole) of the fuel, (3) to transmit electrons generated by oxidation-reduction to the current collector, and (4) to transport protons generated by the reaction to the solid electrolyte. In order to accomplish (1), the catalyst layer must be porous to allow the liquid and gas fuels to permeate deeply. (2) is borne by the aforementioned active metal catalyst, and (3) is borne by the also aforementioned carbon material. In order to fulfill the function of (4), the catalyst layer is mixed with a proton conductive material.

Next, a preparation method of an anode electrode and a cathode electrode is described. A dispersion liquid (catalyst layer coating solution) prepared by dissolving the proton conductive material as represented by NAFION into a solvent and mixing it with the active metal catalyst-supported conductive material is dispersed.

Examples of the solvent of the dispersion which is preferably used include heterocyclic compounds (for example, 3-methyl-2-oxazolidinone and N-methylpyrrolidone); cyclic ethers (for example, dioxane and tetrahydrofuran); chain ethers (for example, diethyl ether, ethylene glycol dialkyl ethers, propylene glycol dialkyl ethers, polyethylene glycol dialkyl ethers and polypropylene glycol dialkyl ethers); alcohols (for example, methanol, ethanol, isopropanol, ethylene glycol monoalkyl ethers, propylene glycol monoalkyl ethers, polyethylene glycol monoalkyl ethers and polypropylene glycol monoalkyl ethers); polyhydric alcohols (for example, ethylene glycol, propylene glycol, polyethylene glycol, polypropylene glycol and glycerin); nitrile compounds (for example, acetonitrile, glutarodinitrile, methoxyacetonitrile, propionitrile and benzonitrile); non-polar solvents (for example, toluene and xylene) ; chlorine based solvents (for example, methylene chloride and ethylene chloride); amides (for example, N,N-dimethylformamide, N,N-dimethylacetamide and acetamide); and water. Of these, heterocyclic compounds, alcohols, polyhydric alcohols and amides are especially preferably used.

The dispersion may be carried out by stirring, and ultrasonic dispersion, a ball mill and the like may also be used. The resulting dispersion liquid may be coated by using a coating method such as a curtain coating, extrusion coating, roll coating, spin coating, dip coating, bar coating, spray coating, slide coating and print coating methods.

Coating of the dispersion liquid will be described. In a coating process, a film may be formed by extrusion molding, or casting or coating of the above-described dispersion liquid. A support in this case is not particularly restricted, and preferable examples thereof include a glass substrate, a metal substrate, a polymer film, a reflection board and the like. Examples of the polymer film include a film of cellulose-based polymers such as triacetyl cellulose (TAC), ester-based polymers such as polyethylene terephthalate (PET) and polyethylene naphthalate (PEN), fluorine-containing polymers such as polytrifluoroethylene (PTFE), and polyimide. The coating may be carried out according to a known system such as a curtain coating, extrusion coating, roll coating, spin coating, dip coating, bar coating, spray coating, slide coating and print coating methods. In particular, use of a conductive porous material (carbon paper, carbon cloth) as the support makes direct manufacture of the catalyst electrode possible.

These operations may be carried out by a film-forming machine that uses rolls such as calendar rolls or cast rolls, or a T die, or press molding by a press machine may also be utilized. Further, a stretching process may be added to control the film thickness or improve film characteristics. As another method, a method, in which an electrode catalyst having been formed in a paste shape as described above is directly sprayed to the solid electrolyte film with an ordinary sprayer to form the catalyst layer, can be also used. Control of the spray time and the spray volume makes formation of a uniform electrode catalyst layer possible.

Drying temperature in the coating process relates to the drying speed, and can be selected in accordance with properties of the material. It is preferably -20°C to 150°C, more preferable 20°C to 120°C, and further preferably 50°C to 100°C. A shorter drying time is preferable from the viewpoint of productivity, however, a too short time tends to easily generate such defects as bubbles or surface irregularity. Therefore, drying time of 1 minute to 48 hours is preferable, 5 minutes to 10 hours is more preferable, and 10 minutes to 5 hours is further preferable. Control of humidity is also important, and relative humidity (RH) is preferably 25 to 100%, and more preferably 50 to 95%.

The coating liquid (dispersion liquid) in the coating process preferably contains a small amount of metal ions, and in particular, it contains a small amount of transition metal ions, especially an iron, nickel and cobalt ions. The content of transition metal ions is preferably 500 ppm or less, and more preferably 100 ppm or less. Therefore, solvents used in the aforementioned processes preferably contains these ions in a small amount, too.

Further, a surface treatment may be carried out after performing the coating process. As to the surface treatment, surface roughening, surface cutting, surface removing or surface coating may be performed, which may, in some cases, improve adherence with the solid electrolyte film or the porous conductive material.

In the production method of the membrane and electrode assembly, for example, the electrolyte membrane is assembled with the catalyst layer, the conductive layer and the like to prepare MEA. The preparation is not particularly limited, but known methods can be applied.

First of all, the adhesion method of the catalyst layer and the electrolyte membrane is described. The conductive layer having the catalyst layer coated thereon by the foregoing method or the like is subjected to contact bonding to the electrolyte membrane by a hot pressing method (preferably at from 120 to 250°C and from 0.4 to 10 MPa). A method in which the catalyst layer is coated on an appropriate support (for example, a polytetrafluoroethylene (PTFE) sheet) and subjected to contact bonding while transferring onto the electrolyte membrane, followed by interposing the conductive layer therebetween may be employed, too.

For manufacturing the MEA, following 4 methods are preferable.
(1) Proton conductive material coating method: wherein a catalyst paste (ink) containing an active platinum-supporting carbon, a proton conductive material and a solvent as fundamental components is directly coated on both sides of the solid electrolyte, to which porous conductive sheets are thermal compression-bonded (hot pressed) to manufacture an MEA of 5-layer structure.
(2) Porous conductive sheet coating method: wherein the catalyst paste is coated on the surface of the porous conductive sheet to form a catalyst layer, followed by thermal compression-bonding (hot pressing) with the electrolyte membrane to manufacture an MEA of 5-layer structure. This method is the same as the above-described (1) except that the type of support to be coated is not identical.
(3) Decal method: wherein the catalyst paste is coated on a support (such as a polytetrafluoroethylene (PTFE) sheet) to form a catalyst layer, followed by theremal compression-bonding (hot pressing) to transfer the catalyst layer alone to the electrolyte membrane to form a 3-layer MEA, to which a porous conductive sheet is pressure-bonded to manufacture an MEA of 5-layer structure.
(4) Later catalyst supporting method: wherein an ink, in which a carbon substance not supporting a platinum powder has been mixed with a proton conductive material, is coated on a solid electrolyte, a porous conductive sheet or PTFE to form a film, followed by impregnating platinum ions into the solid electrolyte and reducing the ion to precipitate a platinum powder in the film, thereby forming a catalyst layer. After the formation of the catalyst layer, an MEA is manufactured by the aforementioned methods (1) to (3).

The temperature of the foregoing hot pressing varies depending upon the kind of the electrolyte membrane and is usually 100°C or higher, preferably 130°C or higher, and more preferably 150°C or higher.

In the case where the electrolyte to be used in the foregoing preparation of MEA is a salt in which a cation of the ion exchange site is substituted, the following step is further necessary.

In order to use the electrolyte as an application for a fuel cell, the electrolyte membrane to be used in the invention is required to have proton conductivity. For that reason, a salt substitution rate of the electrolyte membrane to be used in the invention by the contact with an acid is regulated at not more than 1 % of a salt substitution rate before the contact. By contacting with an acid after assembling the electrode catalyst and the electrolyte membrane to be used in the invention, reductions in the water content and ionic conductivity of the membrane due to the heat history to be received at the time of electrode assembling can be recovered.

As a method for contacting with an acid, known methods such as immersion with or spraying an acidic aqueous solution such as hydrochloric acid, sulfuric acid, nitric acid and an organic sulfonic acid can be employed. A concentration of the acidic aqueous solution relies upon a state of lowering of ionic conductivity, an immersion temperature, an immersion time, etc. For example, an acidic aqueous solution of from 0.0001 to 5 N can be favorably used. In many cases, when the immersion temperature is room temperature, the conversion can be thoroughly achieved. In the case of shortening the immersion time, the acidic aqueous solution may be heated. The immersion time relies upon the concentration and immersion temperature of the acidic aqueous solution, and the immersion can be favorably carried out for from about 10 minutes to 24 hours.

Such method may be also employed that a proton moving in the inside of the film functions as an acid upon operating a fuel cell to wash out a substituted cation, thereby allowing the film to exert a higher ion conductivity. A method for producing the fuel cell using the electrolyte membrane produced by such method is described.

The polymer electrolyte fuel cell is configured of MEA, a collector, a fuel cell frame, a gas supply device, etc. Of these, the collector (bipolar plate) is a graphite-made or metal-made channel forming material-cum-collector having a gas channel on the surface thereof, etc. A fuel cell stack can be prepared by inserting MEA between such collectors and stacking a plural number of the resulting materials.

A higher operating temperature of a fuel cell is preferable, because catalyst activity enhances. But, ordinarily, it is operated at 50°C to 120°C, at which water content is easily controlled. Although a higher supply pressure of oxygen and hydrogen may be preferable because a fuel cell output increases, since probability of their contact through film breakage or the like also increases, the pressure is preferably controlled within a suitable range such as 1 to 3 atmospheric pressures.

An internal resistance of the membrane and electrode assembly of the invention is measured as a single cell. In the polymer electrolyte fuel cell which is configured of a single cell composed of the membrane and electrode assembly and a collector, a fuel cell frame and a gas supply device, the internal resistance of the single cell varies with a gas flow rate of each of a hydrogen gas of the anode electrode to be supplied and air or an oxygen gas of the cathode electrode, a gas supply pressure and a gas supply humidity. A minimum value of the internal resistance of the single cell of the polymer electrolyte fuel cell at 80°C is preferably not more than 100 mΩ·cm², more preferably not more than 90 mΩ·cm², and further preferably not more than 80 mΩ·cm². Also, a minimum value of the internal resistance at 120°C is preferably 600 mΩ·cm², more preferably not more than 550 mΩ·cm², and further preferably not more than 500 mΩ·cm².

As to the fuel which can be used for the fuel cell, examples of an anode fuel include hydrogen, alcohols (for example, methanol, isopropanol and ethylene glycol), ethers (for example, dimethyl ether, dimethoxymethane and trimethoxymethane), forming acid, boron hydride complexes and ascorbic acid. Examples of a cathode fuel include oxygen (also including oxygen in the air) and hydrogen peroxide.

The method for supplying the foregoing anode fuel and cathode fuel into the respective catalyst layers includes two methods of (1) a method of forcedly circulating the fuel using an auxiliary machinery such as a pump (active type); and (2) a method not using an auxiliary machinery (for example, in case of a liquid, a capillary phenomenon or free drop; and in case of a gas, a passive type in which the catalyst layer is exposed to the air and the fuel is supplied). These methods can also be combined. While the former has advantages such as realization of a high output by pressurization and humidity control of a reaction gas or the like, it involves a drawback that it is difficult to achieve downsizing. While the latter has an advantage that downsizing is possible, it involves a drawback that a high output is hardly obtainable.

Since a voltage of the single cell of the fuel cell is generally not more than 1.2 V, single cells are subjected to stacking in series and used in conformity with a necessary voltage of the load. As the method for stacking, "planar stacking" in which single cells are planarly disposed or "bipolar stacking" in which single cells are stacked via a separator having a fuel channel formed on the both sides thereof is employable. In the former, since the cathode electrode (air electrode) is exposed on the surface, air is easily taken in, and thinning can be achieved. Thus, the former is favorable for a small-sized fuel cell. Besides, a method in which stacking is achieved by microfabrication on a silicon wafer while applying an MEMS technology is proposed, too.

### EXAMPLES

The present invention will be described more specifically below based on Examples. The material, use amount, percentage, treatment content, treatment procedure and the like represented in Examples below can be arbitrarily changed as long as the change results in no deviation from the intent of the invention. Accordingly, the scope of the invention is not restricted to the specific examples represented below.

### Example 1

### Preparation of electrolyte membranes 1A to 1D:

Seven kinds of copolymers which are a copolymer of CF₂=CF₂ and CF₂=CFO(CF₂CFCF₃)O(CF₂)₂SO₂F, an ion exchange capacity of which was changed in seven grades within the range of from 0.8 to 1.15 meq/g, were obtained in conformity with a method described in JP-A-2-88645.

Each of the copolymers was subjected to extrusion fabrication at 220°C to obtain a film having a thickness of 10 µm. 10 sheets of the obtained film were stacked in a pattern as shown in Fig. 3 using rolls at 130°C, thereby obtaining films 1A to 1D having a thickness of 100 µm.

In Fig. 3, the abscissa expresses a distance (µm) from an interface of the catalyst layer on the anode electrode side, and a distance (µm) from an interface of the catalyst layer on the cathode electrode side is all 100 µm.

The stacked film was hydrolyzed in a mixed aqueous solution of 30 % by weight of dimethyl sulfoxide and 15 % by weight of potassium hydroxide, washed with water and then immersed with 1 N hydrochloric acid. Next, the film was washed with water, and after restraining four sides of the film by an exclusive jig, the film was dried at 50°C for 2 hours, thereby finishing it into an electrolyte membrane.

In the electrolyte membranes 1A to 1D, while a site at which the ion exchange capacity became maximum was different as shown in Table 1, an ion exchange capacity obtained by averaging the whole of the stacked film was all about 1.0 meq/g.

### Preparation of electrolyte membrane 1E:

A copolymer which is a copolymer of CF₂=CF₂ and CF₂=CFO(CF₂CFCF₃)O(CF₂)₂SO₂F, an ion exchange capacity of which was 1.0 meq/g, was obtained in conformity with a method described in JP-A-2-88645.

This copolymer was subjected to extrusion fabrication at 220°C to obtain a film 1E having a thickness of 100 µm. This film was hydrolyzed in a mixed aqueous solution of 30 % by weight of dimethyl sulfoxide and 15 % by weight of potassium hydroxide, washed with water and then immersed with 1 N hydrochloric acid.

Next, the film was washed with water, and after restraining four sides of the film by an exclusive jig, the film was dried at 50°C for 2 hours, thereby finishing it into an electrolyte membrane. An ion exchange capacity of the electrolyte membrane 1E was uniform over the whole of the membrane and was about 1.0 meq/g.

### Preparation of membrane and electrode assembly:

On the other hand, for the purpose of preparing a catalyst layer, commercially available platinum-supported carbon (mass ratio of platinum: 50 %, manufactured by Takana Kikinzoku Kogyo K. K.), pure water, a commercially available 5 % by mass NAFION 117 solution (manufactured by Aldrich) and isopropanol were mixed in a mass ratio of 1/2/8/8, thereby preparing an ink A for catalyst. A 60 % aqueous dispersion of PTFE (polytetrafluoroethylene) (manufactured by Daikin Industries, Ltd.) was mixed in an amount of 0.02 g per gram of the platinum-supported carbon with the ink A for catalyst, thereby preparing an ink B for catalyst.

Each of the ink A for catalyst and the ink B for catalyst was coated on a commercially available PTFE film support (manufactured by Saint-Gobain K.K.) in a coating amount of platinum of 0.20 mg/cm² and dried, and thereafter, the sulfonic acid site of the foregoing film was assembled with the electrolyte membrane by means of hot pressing.

The hot pressing was carried out at a temperature of 125°C under a pressure of 3 MPa for 2 minutes. Thereafter, the membrane and electrode assembly was immersed with 1 N sulfuric acid at room temperature for 16 hours and then washed with water, and after restraining four sides of the membrane and electrode assembly by an exclusive jig, the membrane and electrode assembly was dried at room temperature for 16 hours. The membrane and electrode assembly sample as prepared in this Example and the electrolyte membrane and the ink for catalyst used for the preparation thereof are shown in Table 1.

### Building up of fuel cell and evaluation of performance:

Commercially available carbon paper (manufactured by Toray Industries, Inc.), a gasket and a gas supply channel-provided separator were disposed on the both sides of the above-prepared membrane and electrode assembly, thereby building up a fuel cell. A supply pressure of a fuel gas was set up at 0.1 MPa for hydrogen and 0.25 MPa for air, respectively; a relative humidity of the fuel gas was set up in two ways of 100 % RH and 80 % RH; a temperature of the fuel cell was set up at 80°C; and current-voltage (I-V) properties were measured. The results are shown in Table 1. Superiority or inferiority of the performance was evaluated in terms of a value of output voltage at a current density of 1 A/cm².

In comparison with comparative samples 105 to 108, samples 101 to 104 of the invention are high in the output voltage and when the relative humidity of the fuel gas is low, are small in a lowering of the output voltage, and therefore, they are preferable. From the results shown in Table 1, it was confirmed that as to a width of enhancement of the performance by making the distribution of ion exchange capacity of the electrolyte membrane fall within an embodiment of the invention, the case of containing a fluorine resin in the catalyst layer on the cathode electrode side is larger than the case of not containing it and is satisfactory in arrival performance.

### Example 2

### Preparation of electrolyte membrane 2A:

A film of a copolymer of CH₂=CH₂ and CF₂=CF₂ (thickness: 90 µm) was irradiated with γ-rays at a dose of 10 kGy in air at room temperature. Thereafter, the film was subjected to a graft reaction at 60°C for 160 minutes such that one surface of the film was brought into contact with a mixed solution of 100 parts by volume of styrene and 20 parts by volume of xylene, with the other surface of the film being brought into contact with xylene.

After drying the film, the both surfaces of the film were brought into contact with a mixed solution of 5 parts by volume of chlorosulfonic acid and 60 parts by volume of 1, 2-dichloroethane at room temperature for 80 minutes, thereby performing a sulfonating reaction. After drying, the film was hydrolyzed in 1 N potassium hydroxide and subsequently immersed with 1 N hydrochloric acid. Next, the film was washed with pure water at 90°C for 90 minutes. After washing, four sides of the film were restrained by an exclusive jig, and the film was dried at 50°C for 2 hours, thereby preparing an electrolyte membrane X.

The electrolyte membrane X had an ion exchange capacity of 1.47 meq/g.

In view of the matter that a membrane prepared in the same manner as described above, except that the both surfaces of a 45 µm-thick film of a copolymer of CH₂=CH₂ and CF₂=CF₂ irradiated with γ-rays were brought into contact with a mixed solution of 100 parts by volume of styrene and 20 parts by volume of xylene by means of a graft reaction, had an ion exchange capacity of 1. 67 meq/g, the electrolyte membrane X had a maximum ion exchange capacity of about 1.67 meq/g on one surface and a minimum ion exchange capacity of about 1.2 to 1.3 meq/g on the other surface, and it was estimated that the ion exchange capacity continuously decreased from the former surface toward the latter surface.

Subsequently, a film of a copolymer of CH₂=CH₂ and CF₂=CF₂ (thickness: 10 µm) was irradiated with γ-rays at a dose of 10 kGy in air at room temperature. Thereafter, the film was subjected to a graft reaction at 60°C for 160 minutes such that the both surfaces of the film were brought into contact with a mixed solution of 50 parts by volume of styrene and 50 parts by volume of xylene. After the graft polymerization, the same operations as in the preparation of the electrolyte membrane X were followed to prepare an electrolyte membrane Y. The electrolyte membrane Y had an ion exchange capacity of 1.35 meq/g.

The electrolyte membrane Y was stacked on the surface of the electrolyte membrane X on the side having a high ion exchange capacity and assembled using rolls at 130°C, thereby preparing an electrolyte membrane 2A.

### Preparation of electrolyte membrane 2B:

An electrolyte membrane 2B was prepared in the same manner as in the preparation of the electrolyte membrane X, except that in the preparation step of the electrolyte membrane X, the thickness of the film of a copolymer of CH₂=CH₂ and CF₂=CF₂ was changed to 100 µm. The electrolyte membrane 2B had an ion exchange capacity of 1.44 meq/g. The electrolyte membrane 2B had a maximum ion exchange capacity of about 1.70 meq/g on one surface and a minimum ion exchange capacity of about 1.2 to 1.3 meq/g on the other surface, and it was estimated that the ion exchange capacity continuously decreased from the former surface toward the latter surface.

### Preparation of electrolyte membrane 2C:

The thickness of the film of a copolymer of CH₂=CH₂ and CF₂=CF₂ was changed to 100 µm, and this film was irradiated with γ-rays at a dose of 10 kGy in air at room temperature. Thereafter, the film was subjected to a graft reaction at 60°C for 160 minutes such that the both surfaces of the film were brought into contact with a mixed solution of 70 parts by volume of styrene and 30 parts by volume of xylene. After the graft polymerization, the same operations as in the preparation of the electrolyte membrane X were followed to prepare an electrolyte membrane 2C. The electrolyte membrane 2C had an entirely uniform ion exchange capacity, and its value was 1.49 meq/g.

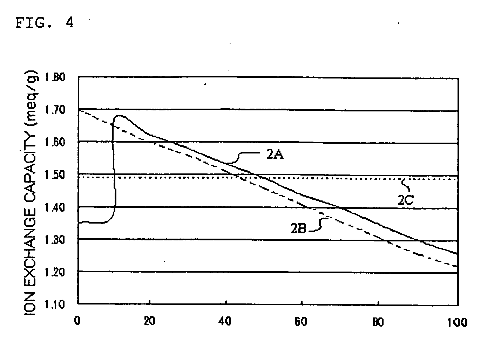

Fig. 4 shows a profile of an ion exchange capacity distribution of each of the electrolyte membranes 2A to 2C. In Fig. 4, the abscissa expresses a distance (µm) from an interface of the catalyst layer on the anode electrode side, and a distance (µm) from an interface of the catalyst layer on the cathode electrode side is all 100 µm.

### Preparation of membrane and electrode assembly:

An ink A for catalyst and an ink B for catalyst of the catalyst layer were each prepared in the same step as in Example 1 and coated on a commercially PTFE film support in a coating amount of platinum of 0.20 mg/cm², dried and then assembled with each of the electrolyte membranes 2A to 2C by means of hot pressing. The hot pressing was carried out at a temperature of 125°C under a pressure of 3 MPa for 2 minutes. Thereafter, the membrane and electrode assembly was immersed with 1 N sulfuric acid at room temperature for 16 hours and then washed with water, and after restraining four sides of the membrane and electrode assembly by an exclusive jig, the membrane and electrode assembly was dried at room temperature for 16 hours. The membrane and electrode assembly sample as prepared in this Example and the electrolyte membrane and the kind of the ink for catalyst used for the preparation thereof are shown in Table 2.

### Building up of fuel cell and evaluation of performance:

A fuel cell was built up under the same condition as in Example 1 and then evaluated for the performance. The results are shown in Table 2.

In comparison with comparative samples 202 to 203, a sample 201 of the invention is high in the output voltage and when the relative humidity of the fuel gas is low, is small in a lowering of the output voltage, and therefore, it is preferable.

Tables 1 and 2 are shown below. In Tables 1 and 2, Ic represents a value of an ion exchange capacity of the site coming into contact with the catalyst layer on the cathode electrode side; Ia represents a value of an ion exchange capacity of the site coming into contact with the catalyst layer on the anode electrode side; and Imax represents a value of the site at which the ion exchange capacity becomes maximum. As to the use of an ink for catalyst, "A" represents the foregoing ink A for catalyst (not containing a fluorine resin) ; and "B" represents the foregoing ink B for catalyst (containing a fluorine resin in an amount of 4 % by weight of platinum).

**Table 1**

| Sample No. | Specification of electrolyte membrane | | | | Specification of ink for catalyst | | Output voltage at the time when current density is 1 A/cm² | |
|---|---|---|---|---|---|---|---|---|
| | Sample name | Site at which ion exchange capacity becomes maximum | Ic/Imax ratio | Ia/Imax ratio | Anode electrode side | Cathode electrode side | At the time when the relative humidity of fuel gas is 100 % RH at 80°C | At the time when the relative humidity of fuel gas is 80 % RH at 80°C |
| 101 (Invention) | 1A | 40 to 50 % inside the thickness from interface with catalyst layer on the anode electrode side | 0.69 | 0.79 | A | B | 0.59 V | 0.52 V |
| 102 (Invention) | 1B | 20 to 30 % inside the thickness from interface with catalyst layer on the anode electrode side | 0.69 | 0.79 | A | B | 0.61 V | 0.54 V |
| 103 (Invention) | 1C | 10 to 20 % inside the thickness from interface with catalyst layer on the anode electrode side | 0.69 | 0.79 | A | B | 0.63 V | 0.56 V |
| 104 (Invention) | 1C | 10 to 20 % inside the thickness from interface with catalyst layer on the anode electrode side | 0.69 | 0.79 | A | A | 0.59 V | 0.50 V |
| 105 (Comparison) | 1D | Vicinity of interface with catalyst layer on the anode electrode side | 0.69 | 1.00 | A | B | 0.55 V | 0.45 V |
| 106 (Comparison) | 1D | Vicinity of interface with catalyst layer on the anode electrode side | 0.69 | 1.00 | A | A | 0.54 V | 0.44 V |
| 107 (Comparison) | 1E | Uniform distribution of ion exchange capacity | 1.00 | 1.00 | A | B | 0.52 V | 0.43 V |
| 108 (Comparison) | 1E | Uniform distribution of ion exchange capacity | 1.00 | 1.00 | A | A | 0.51 V | 0.42 V |

**Table 2**

| Sample No. | Specification of electrolyte membrane | | | | Specification of ink for catalyst | | Output voltage at the time when current density is 1 A/cm² | |
|---|---|---|---|---|---|---|---|---|
| | Sample name | Site at which ion exchange capacity becomes maximum | Ic/Imax ratio | Ia/Imax ratio | Anode electrode side | Cathode electrode side | At the time when the relative humidity of fuel gas is 100 % RH at 80°C | At the time when the relative humidity of fuel gas is 80 % RH at 80°C |
| 201 (Invention) | 2A | 10 % inside the thickness from interface with catalyst layer on the anode electrode side | 0.75 | 0.81 | A | B | 0.62 V | 0.57 V |
| 202 (Comparison) | 2B | Vicinity of interface with catalyst layer on the anode electrode side | 0.72 | 1.00 | A | B | 0.54 V | 0.46 V |
| 203 (Comparison) | 2C | Uniform distribution of ion exchange capacity | 1.00 | 1.00 | A | B | 0.51 V | 0.43 V |

## Claims

1. A membrane and electrode assembly comprising an anode electrode having a catalyst layer, a cathode electrode having a catalyst layer and an electrolyte membrane interposed between these catalyst layers whose ion exchange capacity is distributed in the thickness direction of the electrolyte membrane so that:
(i) it is at a maximum at a depth of from 10 to 30% from its interface with the catalyst layer of the anode electrode; and
(ii) if the ion exchange capacity of the electrolyte membrane where it contacts the catalyst layer of the cathode is Ic, the ion exchange capacity of the electrolyte membrane where it contacts the catalyst layer of the anode is Ia, and the maximum ion exchange capacity of the electrolyte membrane is Imax, then 0.4Imax≤Ic≤0.9Imax and 0.6Imax≤Ia≤0.9Imax.

2. A membrane and electrode assembly according to Claim 1, wherein the ion exchange capacity of the electrolyte membrane is at a maximum at a depth of 10 µm or more from its interface with the catalyst layer of the anode electrode.

3. A membrane and electrode assembly according to Claim 1 or Claim 2, wherein the catalyst layer of the cathode electrode contains a fluorine resin in an amount of 2% by weight or more of the weight of the active metal catalyst of the catalyst layer.

4. A membrane and electrode assembly according to any preceding claim, wherein the electrolyte membrane contains a polymer having, in a main chain thereof, a chemical structure of -(CF₂-CF₂)ₙ- or -(CF₂-CF₂)ₓ-(CH₂-CH₂)_{y}-, wherein n, x and y are each an integer.

5. A fuel cell comprising the membrane and electrode assembly as defined in any preceding claim.

## Patentansprüche

1. Membran- und Elektrodenanordnung, umfassend eine Anodenelektrode mit einer Katalysatorschicht, eine Kathodenelektrode mit einer Katalysatorschicht und eine Elektrolytmembran, die zwischen diesen Katalysatorschichten angeordnet ist, deren Ionenaustauschfähigkeit in der Dickenrichtung der Elektrolytmembran verteilt ist, so dass:
(i) sie bei einem Maximum bei einer Tiefe von 10 bis 30% von ihrer Zwischenfläche mit der Katalysatorschicht der Anodenelektrode ist; und
(ii) wenn die Ionenaustauschkapazität der Elektrolytmembran dort, wo sie die Katalysatorschicht der Kathode kontaktiert, Ic ist, die
Ionenaustauschfähigkeit der Elektrolytmembran, wo sie die Katalysatorschicht der Anode kontaktiert, Ia ist und die maximale Ionenaustauschkapazität der Elektrolytmembran Imax ist, gilt: 0,4 Imax ≤ Ic ≤ 0,9 Imax und 0,6 Imax ≤ Ia ≤ 0,9 Imax.

2. Membran- und Elektrodenanordnung nach Anspruch 1, worin die Ionenaustauschkapazität der Elektrolytmembran bei einem Maximum bei einer Tiefe von 10 µm oder mehr von ihrer Zwischenfläche mit der Katalysatorschicht der Anodenelektrode ist.

3. Membran- und Elektrodenanordnung nach Anspruch 1 oder 2, worin die Katalysatorschicht der Kathodenelektrode ein Fluorharz in einer Menge von 2 Gew.-% oder mehr des Gewichtes des aktiven Metallkatalysators der Katalysatorschicht enthält.

4. Membran- und Elektrodenanordnung nach einem der vorhergehenden Ansprüche, worin die Elektrolytmembran ein Polymer enthält, umfassend in einer Hauptkette davon eine chemische Struktur -(CF₂-CF₂)ₙ- oder -(CF₂-CF₂)ₓ-(CH₂-CH₂)_{y}-, worin n, x und y jeweils eine ganze Zahl sind.

5. Brennstoffzelle, umfassend die Membran- und Elektrodenanordnung wie in einem der vorhergehenden Ansprüche definiert.

## Revendications

1. Ensemble membrane et électrode comprenant une électrode d'anode ayant une couche de catalyseur, une électrode de cathode ayant une couche de catalyseur et une membrane électrolytique interposée entre ces couches de catalyseur dont la capacité d'échange d'ions est répartie dans la direction de l'épaisseur de la membrane électrolytique de sorte que :
(i) elle est à un maximum à une profondeur de 10 à 30 % à partir de son interface avec la couche de catalyseur de l'électrode d'anode ; et
(ii) si la capacité d'échange d'ions de la membrane électrolytique où elle entre en contact avec la couche de catalyseur de la cathode est Ic, que la capacité d'échange d'ions de la membrane électrolytique où elle entre en contact avec la couche de catalyseur de l'anode est Ia, et que la capacité d'échange d'ions maximale de la membrane électrolytique est Imax, alors 0,4 Imax ≤ Ic ≤ 0,9 Imax et 0,6 Imax ≤ Ia ≤ 0,9 Imax.

2. Ensemble membrane et électrode selon la revendication 1, dans lequel la capacité d'échange d'ions de la membrane électrolytique est à un maximum à une profondeur de 10 µm ou plus à partir de son interface avec la couche de catalyseur de l'électrode d'anode.

3. Ensemble membrane et électrode selon la revendication 1 ou la revendication 2, dans lequel la couche de catalyseur de l'électrode de cathode contient une résine de fluor en une quantité de 2 % en poids ou plus du poids du catalyseur métallique actif de la couche de catalyseur.

4. Ensemble membrane et électrode selon l'une quelconque des revendications précédentes, dans lequel la membrane électrolytique contient un polymère ayant, dans une chaîne principale de celui-ci, une structure chimique de - (CF₂-CF₂)ₙ- ou - (CF₂-CF₂)ₓ-(CH₂-CH₂)_{y}-, dans laquelle n, x et y sont chacun un entier.

5. Pile à combustible comprenant l'ensemble membrane et électrode tel que défini dans l'une quelconque des revendications précédentes.
